# EUROPÄISCHE PATENTSCHRIFT

(11) **EP 3 885 573 B1**
(45) Veröffentlichungstag und Bekanntmachung des Hinweises auf die Patenterteilung: **12.10.2022**
(21) Anmeldenummer: 20166241.8
(22) Anmeldetag: 27.03.2020
(51) Int. Cl.: F03D 1/06

(54) **STEG ZUR VERSTEIFUNG EINES WINDENERGIEANLAGENROTORBLATTS**
BAR FOR REINFORCING A WIND ENERGY SYSTEM ROTOR BLADE
PONT DE RIGIDIFICATION D'UNE PALE DE ROTOR D'ÉOLIENNE

(43) Veröffentlichungstag der Anmeldung: 29.09.2021
(73) Patentinhaber: Nordex Energy SE & Co. KG, 22419 Hamburg (DE)
(72) Erfinder: WARZOK, Felix, 22399 Hamburg (DE)
(74) Vertreter: Hauck Patentanwaltspartnerschaft mbB

(56) Entgegenhaltungen:
- EP-A1- 2 570 254
- US-A1- 2014 322 025
- US-A1- 2018 238 301

## Beschreibung

Die Erfindung betrifft einen Steg zur Versteifung eines Windenergieanlagenrotorblatts. Windenergieanlagenrotorblätter weisen eine aerodynamische Hülle und eine Tragstruktur auf. Bei der heute dominierenden Bauweise werden die Windenergieanlagenrotorblätter aus zwei in Faserverbundbauweise hergestellten Halbschalen zusammengefügt. Die Tragstruktur umfasst in Längsrichtung des Windenergieanlagenrotorblatts verlaufende Gurte, die in der Regel in die Halbschalen integriert sind. Grundsätzlich ist auch eine gesonderte Fertigung der Gurte und eine nachträgliche Verbindung mit den Halbschalen möglich. In beiden Fällen werden die Gurte im Sprachgebrauch dieser Anmeldung als Bestandteile der Halbschalen verstanden. Weiterhin umfasst die Tragstruktur mindestens einen Steg, der sich in Längsrichtung des Windenergieanlagenrotorblatts erstreckt und der zwischen den beiden Halbschalen angeordnet ist.

Häufig sind die Stege zwischen zwei paarweise gegenüberliegenden Gurten angeordnet. Sie führen zu einer signifikanten Versteifung des Blattprofils und sorgen so für eine Erhöhung der Beulfestigkeit und entlasten die Verbindungen zwischen den beiden Halbschalen. Hierfür müssen die Stege selbst hohe Lasten aufnehmen. Um dies bei möglichst geringem Gewicht zu ermöglichen, werden die Stege in der Regel in Sandwichbauweise hergestellt. Möglich ist die Verwendung eines einzigen Stegs oder zweier als Kastenform angeordneter Stege. Um eine gute Kraftaufnahme zwischen Steg und Schale zu garantieren, werden die Stege in der Regel auf den Gurten angeordnet. Bei den heute üblichen großen Profilen der Rotorblätter ist die Verwendung mehrerer Gurte verbreitet. Die Anordnung zusätzlicher Stege zwischen den zusätzlichen Gurten wird ebenfalls praktiziert. Theoretisch ist eine beliebige Anzahl an Stegen im Rotorblatt vorstellbar. Ebenfalls bekannt ist die Verwendung eines zusätzlichen, sogenannten Abschlussstegs an einer als "dicke Hinterkante" ausgebildeten Profilendkante.

Aus den Druckschriften EP 2 591 229 B1, EP 2 881 237 B1, WO 2016/066816 A1, EP 3 165 762 A1, WO 2018/100152 A1, EP 3 396 155 A1 und EP 3 486 476 A1 sind in Sandwichbauweise erstellte Stege zur Versteifung von Windenergieanlagenrotorblättern bekannt geworden, bei denen unterschiedliche Maßnahmen getroffen werden, um die Stabilität der Verbindungsbereiche der Stege zu den Halbschalen zu erhöhen und/oder die Fertigung der Stege zu vereinfachen. Weitere Beispiele aus dem Stand der Technik werden in US2018238301 und US2014322025 offenbart.

Davon ausgehend ist es die Aufgabe der Erfindung, einen verbesserten Steg für ein Windenergieanlagenrotorblatt zur Verfügung zu stellen.

Diese Aufgabe wird gelöst durch den Steg mit den Merkmalen des Anspruchs 1. Vorteilhafte Ausgestaltungen sind in den Unteransprüchen angegeben. Der Steg dient zur Versteifung eines Windenergieanlagenrotorblatts und weist folgendes auf:
- einen ersten Flansch zum Verbinden mit einer ersten Halbschale des Windenergieanlagenrotorblatts,
- einen zweiten Flansch zum Verbinden mit einer zweiten Halbschale des Windenergieanlagenrotorblatts,
- einen Kern, der sich über eine Höhe des Stegs erstreckt und eine erste Stirnfläche, die der ersten Halbschale zugewandt ist, eine zweite Stirnfläche, die der zweiten Halbschale zugewandt ist, eine vordere Seitenfläche, die einer Profilnasenkante des Windenergieanlagenrotorblatts zugewandt ist, und eine hintere Seitenfläche, die einer Profilendkante des Windenergieanlagenrotorblatts zugewandt ist, aufweist,
- eine erste Lage von Verstärkungsfasern mit einem ersten Abschnitt, der an der hinteren Seitenfläche des Kerns angeordnet ist, und einem zweiten Abschnitt, der an der ersten Stirnfläche des Kerns angeordnet ist und sich von dort weiter zur Profilnasenkante hin erstreckt, so dass er einen zur Profilnasenkante weisenden Abschnitt des ersten Flanschs bildet, und
- eine zweite Lage von Verstärkungsfasern mit einem ersten Abschnitt, der an der vorderen Seitenfläche des Kerns angeordnet ist, und einem zweiten Abschnitt, der an der zweiten Stirnfläche des Kerns angeordnet ist und sich von dort weiter zur Profilendkante hin erstreckt, so dass er einen zur Profilendkante weisenden Abschnitt des zweiten Flanschs bildet.

Der Steg ist in Sandwichbauweise aufgebaut, wobei der Kern im Inneren des Stegs angeordnet ist. Die Deckschichten des Sandwichaufbaus bestehen aus einem Faserverbundmaterial, das mindestens die beiden genannten Lagen von Verstärkungsfasern umfasst. Die Deckschichten können den Kern allseitig umschließen.

Der Kern kann zum Beispiel Balsaholz, ein geschäumtes Kunststoffmaterial oder ein sonstiges Kernmaterial aufweisen oder aus einem dieser Materialien bestehen. Der Kern kann einteilig oder mehrteilig ausgeführt sein, aus einem einzigen Material oder unter Verwendung unterschiedlicher Materialien. Der Kern kann im Wesentlichen scheiben- oder plattenförmig sein. Der Kern erstreckt sich im Wesentlichen in Längsrichtung des Windenergieanlagenrotorblatts, und zwar über dessen gesamte Länge oder einen Teil, insbesondere einen Großteil davon. Orthogonal zur Längsrichtung erstreckt sich der Kern über eine Höhe des Stegs, die im Wesentlichen einem Abstand zwischen den beiden Halbschalen entspricht. Natürlich kann die Höhe des Kerns etwas kleiner sein als die Höhe des Stegs, insbesondere weil der Kern auch an seinen Stirnflächen von Verstärkungsfasern umgeben ist. Die beiden Stirnflächen des Kerns sind unmittelbar oder nahe an den jeweiligen Flanschen angeordnet. Bei einem zentral angeordneten Steg entspricht die Höhe des Stegs etwa der Profildicke des Rotorblatts. Die Höhe des Stegs kann in Längsrichtung des Stegs entsprechend der Profildicke des Rotorblatts variieren.

Die Verstärkungsfasern können zum Beispiel Glasfasern oder Kohlenstofffasern sein. Eine Lage von Verstärkungsfasern kann insbesondere ein Gewebe aus einem oder mehreren Typen der Verstärkungsfasern oder sonstigen Fasern sein. Möglich ist jedoch auch eine Verwendung von Fasergelegen oder Fasermatten oder sonstigen Faserhalbzeugen oder Kombinationen davon, einschließlich mehrschichtiger Lagen.

Der Steg kann im Vakuuminfusionsverfahren hergestellt sein, also durch Einlegen der Verstärkungsfasern und des Kerns in eine Herstellungsform und anschließende Infusion eines flüssigen Kunststoffmaterials unter Vakuum. Alternativ kann der Steg im Handlaminierverfahren und/oder unter Verwendung von vorimprägnierten Faserhalbzeugen (*prepregs*) hergestellt sein.

Der erste Flansch erstreckt sich ausgehend von der ersten Stirnfläche in Richtung zur Profilnasenkante hin. Dieser Abschnitt des ersten Flanschs wird zumindest teilweise vom zweiten Abschnitt der ersten Lage gebildet. Der erste Flansch kann zusätzlich einen ausgehend von der ersten Stirnfläche in Richtung zur Profilendkante hin erstreckten Abschnitt aufweisen. Entsprechend kann sich der zweite Flansch ausgehend von der zweiten Stirnfläche in Richtung zur Profilendkante hin erstrecken. Dieser Abschnitt des zweiten Flanschs wird zumindest teilweise vom zweiten Abschnitt der zweiten Lage gebildet. Der zweite Flansch kann zusätzlich einen ausgehend von der zweiten Stirnfläche in Richtung zur Profilnasenkante hin erstreckten Abschnitt aufweisen. Weisen beide Flansche die genannten zusätzlichen Abschnitte auf, ist der Steg im Querschnitt (also quer zur Längsrichtung) I-förmig. Weist keiner der beiden Flansche einen der genannten zusätzlichen Abschnitte auf, ist der Steg im Querschnitt wie ein aus drei annähernd geradlinigen Abschnitten zusammengesetztes S geformt. Ebenfalls möglich ist, dass nur der erste Flansch oder nur der zweite Flansch einen der genannten zusätzlichen Abschnitte aufweist. Die Flansche können annähernd rechtwinklig zu den Seitenflächen des Kerns ausgerichtet sein, aber auch in einem davon abweichenden Winkel. Die Flansche können in der Querschnittsebene des Stegs jeweils geradlinig verlaufen oder eine Krümmung aufweisen, die an die Innenkontur einer angrenzenden Halbschale angepasst ist.

Der erste Abschnitt der ersten Lage und/oder der erste Abschnitt der zweiten Lage kann sich über die gesamte Höhe des Kerns erstrecken oder nur über einen Teil davon. Der zweite Abschnitt der ersten Lage und/oder der zweite Abschnitt der zweiten Lage kann sich über die gesamte Breite des von ihm gebildeten Flanschabschnitts erstrecken oder nur über einen Teil davon. Alle genannten Lagen von Verstärkungsfasern können sich über die gesamte Länge des Kerns bzw. des Stegs erstrecken oder nur über einen oder mehrere Längsabschnitte des Kerns bzw. Stegs.

Die Erfindung beruht auf der Erkenntnis, dass die Stege im Betrieb des Windenergieanlagenrotorblatts nicht nur auf Zug und Druck belastet werden, sondern dass zusätzlich hohe asymmetrische (Biege-) Belastungen auftreten, die zu Beschädigungen an den Flanschen führen können. Diese resultieren insbesondere aus einer Schubverformung des Windenergieanlagenrotorblattquerschnitts, die unter starken Schlaglasten auftreten kann. Eine Schubverformung kann selbst dann auftreten, wenn die Schlaglasten im Wesentlichen in Richtung der Höhe des Stegs wirken, weil die Halbschalen und/oder die Tragstruktur des Windenergieanlagenrotorblatts asymmetrisch aufgebaut sein können, zum Beispiel bei einer asymmetrischen Belegung der Halbschalen mit dem Ziel einer Biege-Torsions-Kopplung. Bei einer Schubverformung verschieben sich beiden Halbschalen relativ zueinander in Richtung der Profilsehne, was zu einem Verkippen des Stegs führt. Dadurch werden im Bereich eines Flanschs die beiden Deckschichten in entgegengesetzte Richtungen belastet. Beispielsweise kann die der Profilnasenkante zugewandte Deckschicht auf Zug, die der Profilendkante zugewandte Deckschicht auf Druck belastet werden. Diese asymmetrische Belastungssituation an den Flanschen des Stegs kann insbesondere dann zu einem Versagen der Konstruktion führen, wenn infolge einer Delamination von Verstärkungsfaserlagen Zugbelastungen in den Kern eingeleitet werden. In diesem Fall bilden sich schnell Risse im Kern, was zu einem Totalversagen des Stegs und in Folge auch des gesamten Rotorblattes führen kann. Eine Reparatur ist in vielen Fällen nicht möglich oder mit sehr hohen Kosten verbunden.

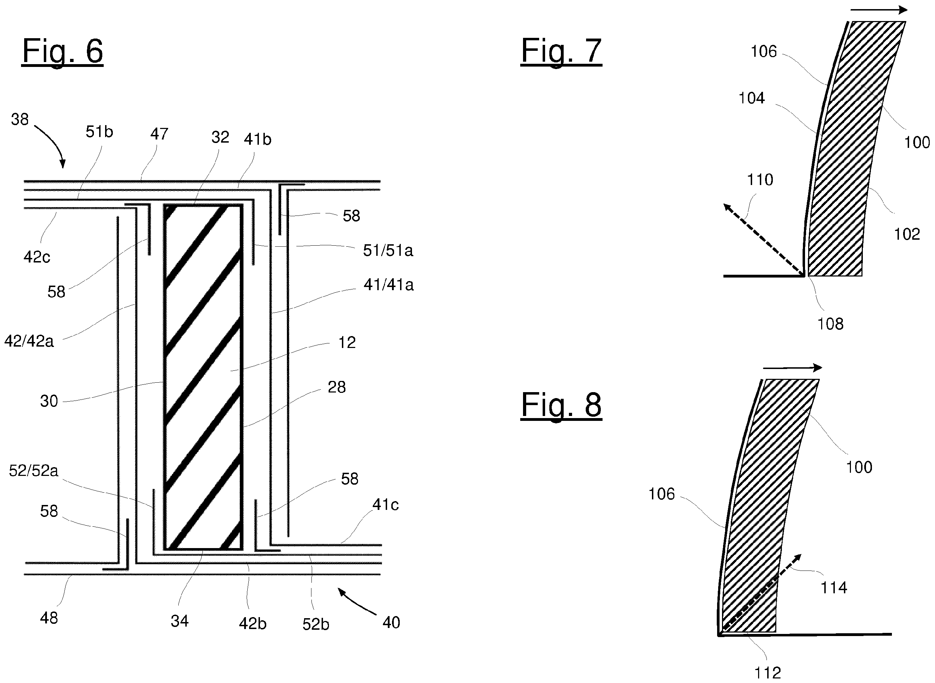

Der Erfinder hat erkannt, dass diese Gefahr durch die spezielle Anordnung der ersten und zweiten Lagen von Verstärkungsfasern erheblich verringert werden kann. Dies wird anhand der Figuren 7 und 8 erläutert. Figur 7 zeigt Elemente des Fußabschnitts eines Stegs im Querschnitt. Der Steg wird durch eine Schubverformung des Windenergieanlagenrotorblatts an seinem oberen Ende in der Figur nach rechts verkippt. Im dargestellten Fußabschnitt des Stegs führt dies zu einer Druckbelastung an der rechts angeordneten Seitenfläche 102 und einer Zugbelastung an der links angeordneten Seitenfläche 104 des Kerns 100 des Stegs. An der links angeordneten Seitenfläche 104 ist eine Lage 106 von Verstärkungsfasern angeordnet, die unten an einer Kante 108 des Kerns 100 nach links abgewinkelt ist und einen Flansch zur Verbindung mit einer nicht dargestellten Halbschale bildet. Der gestrichelte Pfeil 110 illustriert die im Bereich der Kante 108 auf die Lage 106 einwirkende Kraft. Man erkennt, dass diese Kraft zu einer Ablösung der Lage 106 im Bereich der Kante 108 von dem Kern 100 führen kann. In der Fig. 8 ist dieselbe Belastungssituation dargestellt, allerdings ist die Lage 106 von Verstärkungsfasern an der Kante 108 in die entgegengesetzte Richtung abgewinkelt, so dass sie zunächst entlang der unteren Stirnfläche 112 verläuft und im Anschluss einen in die andere Richtung als in Fig. 7 verlaufenden Flansch bildet. Die durch den gestrichelten Pfeil 114 veranschaulichte Kraft presst die Lage 106 von Verstärkungsfasern im Bereich der Kante 108 an den Kern 100 heran. Es besteht keine vergleichbare Gefahr einer Ablösung der Lage 106.

Bei der Erfindung werden die erste Lage und die zweite Lage derart angeordnet, dass die als vorteilhaft erkannte Situation der Fig. 8 an beiden Flanschen gegeben ist, wenn der Steg in der zu der auftretenden Schubverformung passenden Orientierung in dem Windenergieanlagenrotorblatt angeordnet wird. Tritt konstruktionsbedingt vor allem eine Schubverformung ein, bei der eine saugseitige Halbschale des Rotorblatts relativ zu einer druckseitigen Halbschale in Richtung zur Profilendkante hin verlagert wird, wird der erste Flansch mit der saugseitigen Halbschale und der zweite Flansch mit der druckseitigen Halbschale verbunden. Tritt konstruktionsbedingt vor allem eine Schubverformung ein, bei der eine saugseitige Halbschale des Rotorblatts relativ zu einer druckseitigen Halbschale in Richtung zur Profilnasenkante hin verlagert wird, wird der erste Flansch mit der druckseitigen Halbschale und der zweite Flansch mit der saugseitigen Halbschale verbunden. Auf diese Weise wird in beiden Fällen eine optimale und dauerhafte Versteifung des Windenergieanlagenrotorblatts erzielt.

In einer Ausgestaltung weist der Steg mindestens eine weitere erste Lage von Verstärkungsfasern, die wie die erste Lage angeordnet ist, und/oder mindestens eine weitere zweite Lage von Verstärkungsfasern, die wie die zweite Lage angeordnet ist, auf. Damit ist gemeint, dass die mindestens eine weitere Lage ebenfalls einen ersten Abschnitt aufweist, der an der hinteren Seitenfläche des Kerns angeordnet ist, und einen zweiten Abschnitt, der an der ersten Stirnfläche des Kerns angeordnet ist und sich von dort weiter zur Profilnasenkante hin erstreckt, so dass er einen zur Profilnasenkante weisenden Abschnitt des ersten Flanschs bildet, bzw. dass die mindestens eine weitere Lage ebenfalls einen ersten Abschnitt, der an der vorderen Seitenfläche des Kerns angeordnet ist, und einen zweiten Abschnitt, der an der zweiten Stirnfläche des Kerns angeordnet ist und sich von dort weiter zur Profilendkante hin erstreckt, so dass er einen zur Profilendkante weisenden Abschnitt des zweiten Flanschs bildet, aufweist. Die jeweilige mindestens eine weitere Lage kann an der ersten bzw. an der zweiten Lage anliegen oder in einem Abstand davon angeordnet sein. Die ersten und zweiten Abschnitte können im Wesentlichen deckungsgleich sein, es ist aber auch möglich, dass sich z.B. der erste Abschnitt der ersten Lage über eine größeren oder kleineren Abschnitt erstreckt, als der erste Abschnitt einer der mindestens einen weiteren Lage. In jedem Fall wird durch jede weitere Lage eine zusätzliche Verstärkung des Stegs in dem jeweiligen Übergangsbereich zwischen Kern und Flansch erreicht.

In einer Ausgestaltung liegt der erste Abschnitt der ersten Lage unmittelbar an der hinteren Seitenfläche an und/oder der erste Abschnitt der zweiten Lage liegt unmittelbar an der vorderen Seitenfläche an und/oder der zweite Abschnitt der ersten Lage liegt unmittelbar an der ersten Stirnfläche an und/oder der zweite Abschnitt der zweiten Lage liegt unmittelbar an der zweiten Stirnfläche an. Grundsätzlich können zwischen den genannten Abschnitten und Flächen auch weitere Materialien angeordnet sein, insbesondere eine oder mehrere sonstige Lagen von Verstärkungsfasern. Liegen die Abschnitte jedoch direkt an den jeweiligen Flächen an, wird ein besonders wirksamer Schutz vor einer Delamination im Bereich der betreffenden Kante des Kerns erzielt.

In einer Ausgestaltung weist der Steg eine dritte Lage von Verstärkungsfasern mit einem ersten Abschnitt, der an der hinteren Seitenfläche des Kerns angeordnet ist, und einem zweiten Abschnitt, der einen zur Profilendkante weisenden Abschnitt des zweiten Flanschs bildet, auf, und/oder der Steg weist eine vierte Lage von Verstärkungsfasern mit einem ersten Abschnitt, der an der vorderen Seitenfläche des Kerns angeordnet ist, und einem zweiten Abschnitt, der einen zur Profilnasenkante weisenden Abschnitt des ersten Flanschs bildet, auf. Diese zusätzlichen Lagen sind nicht an einer der Stirnflächen des Kerns angeordnet. Die dritte Lage verstärkt den Übergang zwischen dem Kern und dem von der zweiten Lage gebildeten Flanschabschnitt. Die vierte Lage verstärkt den Übergang zwischen dem Kern und dem von der ersten Lage gebildeten Flanschabschnitt.

In einer Ausgestaltung weist die erste Lage einen dritten Abschnitt, der einen zur Profilendkante weisenden Abschnitt des zweiten Flanschs bildet, auf und/oder die zweite Lage weist einen dritten Abschnitt, der einen zur Profilnasenkante weisenden Abschnitt des ersten Flanschs bildet, auf. In diesem Fall erstrecken sich die erste bzw. die zweite Lage über die gesamte Höhe des Kerns und tragen jeweils zur Festigkeit beider Flansche bei.

In einer Ausgestaltung weist der Steg eine fünfte Lage von Verstärkungsfasern mit einem ersten Abschnitt, der an der hinteren Seitenfläche angeordnet ist, und einem zweiten Abschnitt, der einen zur Profilendkante weisenden Abschnitt des ersten Flanschs bildet, auf und/oder der Steg weist eine sechste Lage von Verstärkungsfasern mit einem ersten Abschnitt, der an der vorderen Seitenfläche angeordnet ist, und einem zweiten Abschnitt, der einen zur Profilnasenkante weisenden Abschnitt des zweiten Flanschs bildet, auf. Diese zusätzlichen Lagen bilden jeweils einen zusätzlichen Flanschabschnitt, der in die entgegengesetzte Richtung weist, wie der von der ersten bzw. zweiten Lage gebildete Flanschabschnitt.

In einer Ausgestaltung weist der Steg eine siebte Lage von Verstärkungsfasern auf, die an der ersten Stirnfläche angeordnet ist und sich von dort sowohl zur Profilnasenkante hin als auch zur Profilendkante hin erstreckt, so dass sie in entgegengesetzte Richtungen weisende Abschnitte des ersten Flanschs bildet, und/oder der Steg weist eine achte Lage von Verstärkungsfasern auf, die an der zweiten Stirnfläche angeordnet ist und sich von dort sowohl zur Profilnasenkante hin als auch zur Profilendkante hin erstreckt, so dass sie in entgegengesetzte Richtungen weisende Abschnitte des zweiten Flanschs bildet. Diese Lagen sind gut zur Ausbildung eines stabilen, im Querschnitt I-förmigen Stegs geeignet.

In einer Ausgestaltung weist der Kern zwischen der ersten Stirnfläche und der hinteren Seitenfläche eine erste Kante und zwischen der ersten Stirnfläche und der vorderen Seitenfläche eine zweite Kante auf, wobei die erste Kante stärker abgerundet ist als die zweite Kante, und/oder der Kern weist zwischen der zweiten Stirnfläche und der vorderen Seitenfläche eine dritte Kante und zwischen der zweiten Stirnfläche und der hinteren Seitenfläche eine vierte Kante auf, wobei die dritte Kante stärker abgerundet ist als die vierte Kante. Durch die relativ starke Abrundung der ersten bzw. dritten Kante wird der dort bestehenden, besonders hohen Delaminationsgefahr zusätzlich entgegengewirkt. Insbesondere kann in diesen Bereichen die erste bzw. zweite Lage besonders exakt an dem Kern anliegend gefertigt werden, so dass sich keine potentiellen Schwachstellen durch sogenannte "Harznester" ausbilden.

In einer Ausgestaltung weist der Steg einen hinteren Zusatzkern auf, der an der hinteren Seitenfläche des Kerns angeordnet ist und sich nur über einen Teil der Höhe des Stegs erstreckt, so dass er die erste Stirnfläche des Kerns verbreitert, und/oder der Steg weist einen vorderen Zusatzkern auf, der an der vorderen Seitenfläche des Kerns angeordnet ist und sich nur über einen Teil der Höhe des Stegs erstreckt, so dass er die zweite Stirnfläche des Kerns verbreitert. Der Steg weicht somit von einem einfachen Rechteckquerschnitt ab und ist entsprechend den auftretenden Belastungen asymmetrisch verbreitert. Dadurch können in den sensiblen Bereichen höhere Lasten aufgenommen werden.

In einer Ausgestaltung ist die erste Lage zwischen dem Kern und dem hinteren Zusatzkern angeordnet und/oder die zweite Lage ist zwischen dem Kern und dem vorderen Zusatzkern angeordnet. In diesem Fall bewirkt die erste bzw. zweite Lage weiterhin insbesondere eine erhöhte Stabilität im Bereich der jeweiligen Kante des Kerns. Außerdem vereinfacht sie eine optimale Verbindung mit dem jeweiligen Zusatzkern.

In einer Ausgestaltung weist der Steg eine Zusatzlage von Verstärkungsfasern mit einem ersten Abschnitt, der an einer der Profilendkante zugewandten Seitenfläche des hinteren Zusatzkerns angeordnet ist, und einem zweiten Abschnitt, der an einer Stirnfläche des hinteren Zusatzkerns, die die erste Stirnfläche des Kerns fortsetzt, und an der ersten Stirnfläche des Kerns angeordnet ist und sich von dort weiter in Richtung zu der Profilnasenkante hin erstreckt, so dass er einen zur Profilnasenkante weisenden Abschnitt des ersten Flanschs bildet, auf und/oder der Steg weist eine Zusatzlage von Verstärkungsfasern mit einem ersten Abschnitt, der an einer der Profilnasenkante zugewandten Seitenfläche des vorderen Zusatzkerns angeordnet ist, und einem zweiten Abschnitt, der an einer Stirnfläche des vorderen Zusatzkerns, die die zweite Stirnfläche des Kerns fortsetzt, und an der zweiten Stirnfläche des Kerns angeordnet ist und sich von dort weiter in Richtung zu der Profilendkante hin erstreckt, so dass er einen zur Profilendkante weisenden Abschnitt des zweiten Flanschs bildet, auf. Die Zusatzlagen betten den jeweiligen Zusatzkern ein und verstärken die Konstruktion ähnlich wie zu der ersten und zweiten Lage erläutert an den ebenfalls besonders delaminationsgefährdeten Kanten des jeweiligen Zusatzkerns.

In einer Ausgestaltung ist eine Oberfläche des Kerns im Bereich einer Kante zwischen einer Stirnfläche und einer angrenzenden Seitenfläche aufgeraut und/oder mit einer gröberen Zellstruktur versehen. Dadurch wird eine verbesserte Anbindung an die angrenzende Lage von Verstärkungsfasern (insbesondere mit einer ersten bzw. zweiten Lage) erzielt. Grundsätzlich wird bei Sandwichkonstruktionen mit relativ glatten und/oder durch eine Versiegelung vor eindringendem, flüssigem Kunststoffmaterial geschützten Kernmaterialien gearbeitet, um ein geringes Gewicht zu erzielen.

An den besonders delaminationsgefährdeten Kanten kann ein höherer Kunststoffanteil jedoch sinnvoll sein. Die höhere Rauigkeit bzw. gröbere Zellstruktur kann insbesondere durch eine mechanische oder chemische Bearbeitung des Kerns in dem betreffenden Oberflächenbereich erzielt werden, z.B. durch Schleifen oder Ätzen.

In einer Ausgestaltung ist zwischen dem Kern und einer angrenzenden Lage von Verstärkungsfasern und/oder zwischen zwei Lagen von Verstärkungsfasern, jeweils insbesondere im Bereich einer Kante zwischen einer Stirnfläche des Kerns und einer angrenzenden Seitenfläche des Kerns, ein Vlies aus einem thermoplastischen Kunststoffmaterial angeordnet. Das Kunststoffmaterial kann zum Beispiel PET (Polyethylenterephthalat), PA (Polyamid) oder PP (Polypropylen) aufweisen. Derartige Vliese, auf Englisch bezeichnet als "*veil*", sind so dünn, dass sie die belastungsoptimierte Anordnung der Verstärkungsfasern praktisch unbeeinträchtigt lassen. Sie können jedoch eine festere Verbindung zwischen den benachbarten Materialien zur Folge haben.

In einer Ausgestaltung umfasst die Erfindung ein Windenergieanlagenrotorblatt mit einer ersten Halbschale, einer zweiten Halbschale, einer Längsrichtung, einem aerodynamischen Profil, das eine Profilnasenkante und eine Profilendkante aufweist, und einem Steg nach einem der Merkmale 1 bis 13, wobei der Steg in der Längsrichtung verläuft und der erste Flansch des Stegs mit der ersten Halbschale und der zweite Flansch des Stegs mit der zweiten Halbschale verbunden ist. Die Verbindung kann als Verklebung realisiert werden, sie kann aber auch mit einem Vakuuminfusionsverfahren hergestellt werden. Die beiden Halbschalen können insbesondere eine druckseitige und eine saugseitige Halbschale sein. Das Windenergieanlagenrotorblatt kann für eine Windenergieanlage mit einem Rotor mit horizontaler Achse bestimmt sein, wobei der Rotor mindestens zwei der Windenergieanlagenrotorblätter aufweisen kann. Das Windenergieanlagenrotorblatt kann eine Länge 30 m oder mehr, 50 m oder mehr, 70 m oder mehr, 80 m oder mehr oder 90 m oder mehr aufweisen. Das Windenergieanlagenrotorblatt kann im Übrigen aufgebaut sein, wie einleitend zum Stand der Technik erläutert, insbesondere hinsichtlich der Anzahl und Anordnung von Gurten und Stegen.

Nachfolgend wird die Erfindung anhand von in Figuren dargestellten Ausführungsbeispielen näher erläutert. Es zeigen:
- Figur 1: ein Windenergieanlagenrotorblatt im Querschnitt,
- Figur 2: einen Steg im Querschnitt,
- Figur 3: einen weiteren Steg mit einer größeren Anzahl von Lagen im Querschnitt,
- Figur 4: einen weiteren Steg mit einem abweichend geformten Kern im Querschnitt,
- Figur 5: noch einen weiteren Steg mit einem Kern und zwei Zusatzkernen im Querschnitt,
- Figur 6: noch einen weiteren Steg mit mehreren Vlieselementen im Querschnitt,
- Figur 7: eine Illustration einer unvorteilhaften Belastungssituation im Querschnitt, und
- Figur 8: eine Illustration einer vorteilhaften Belastungssituation im Querschnitt.

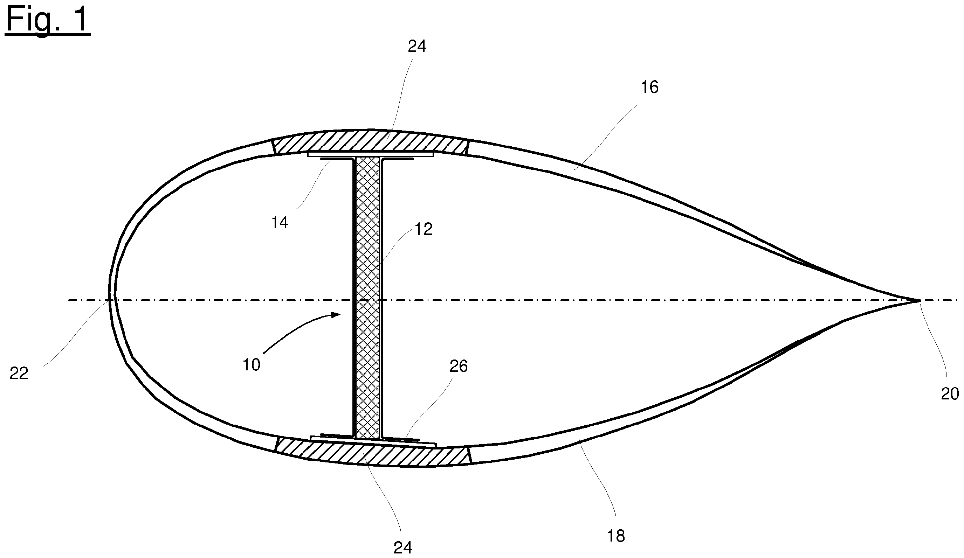

Das in Figur 1 dargestellte Windenergieanlagenrotorblatt, das ebenso wie die Stege in allen übrigen Figuren nur schematisch dargestellt ist, weist eine erste Halbschale 16 und eine zweite Halbschale 18 auf. Die erste Halbschale 16 bildet die Saugseite eines aerodynamischen Profils, die zweite Halbschale 18 bildet die Druckseite des aerodynamischen Profils. In jede der beiden Halbschalen ist ein Hauptgurt 24 integriert. Die beiden Hauptgurte 24 sind einander gegenüberliegend angeordnet, etwa dort, wo das aerodynamische Profil seine größte Dicke aufweist. Das aerodynamische Profil weist außerdem eine Profilendkante 20 und eine Profilnasenkante 22 auf, zwischen denen gestrichelt eine Profilsehne angedeutet ist. Die beiden Halbschalen sind an der Profilnasenkante 20 und an der Profilendkante 22 miteinander verbunden, beispielsweise durch eine Verklebung oder Co-Infusion.

Zwischen den beiden Hauptgurten 24 ist ein Steg 10 angeordnet. Der Steg weist einen ersten Flansch 14 und ein zweiten Flansch 26 auf, wobei der erste Flansch 14 mit der ersten Halbschale 16 und der zweite Flansch 26 mit der weiten Halbschale 18 verbunden, beispielsweise verklebt ist. Ein Kern 12 des Stegs 10 erstreckt sich über eine Höhe, die im Wesentlichen der Höhe des Stegs 10 und zugleich dem zwischen den beiden Halbschalen 16, 18 vorhandenen Abstand entspricht.

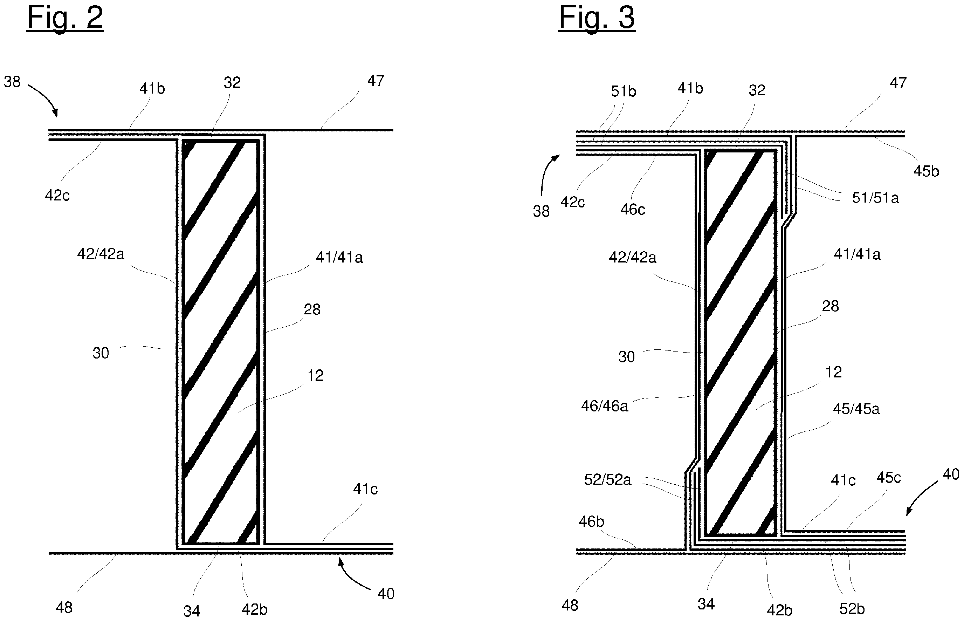

Weitere Einzelheiten des Stegs 10 sind in einer ersten Variante in der Figur 2 erkennbar. Man erkennt, dass der Steg der Figur 2, ebenso wie die in den Figuren 3 bis 6 gezeigten Stege, im Querschnitt I-förmig ausgebildet ist. Alle Stege weisen einen Kern 12 auf, der beispielsweise aus einem geschäumten Kunststoffmaterial besteht. Alle in den Figuren 2 bis 6 gezeigten Kerne 12 weisen eine hintere Seitenfläche 28, eine vordere Seitenfläche 30, eine erste Stirnfläche 32 und eine zweite Stirnfläche 34 auf. Die beiden Seitenflächen 28, 30 erstrecken sich jeweils über die gesamte Höhe des Kerns 12, welche im Wesentlichen der gesamten Höhe des Stegs entspricht. Alle Kerne 12 sind im Wesentlichen scheibenförmig ausgebildet und weisen im Querschnitt sie eine rechteckige Grundform auf. Die beiden Stirnflächen 32, 34 erstrecken sich dabei jeweils im Wesentlichen über die gesamte Dicke des Kerns 12.

Wesentliche Unterschiede bestehen hinsichtlich der Verwendung von Verstärkungsfasern. In der Figur 2 erkennt man eine erste Lage 41, die drei Abschnitte aufweist.

Ein erster Abschnitt 41a ist an der hinteren Seitenfläche 28 angeordnet, ein zweiter Abschnitt 41b ist an der ersten Stirnfläche 32 angeordnet und erstreckt sich von dort aus weiter in Richtung zur Profilnasenkante 22 hin. Obwohl dies in keiner der Figuren 2 bis 6 eingezeichnet ist, befindet sich die Profilnasenkante 22 stets links und die Profilendkante 20 stets rechts des jeweils dargestellten Stegs. Der zweite Abschnitt 41b der ersten Lage 41 bildet somit einen Abschnitt des in der Figur 2 oben angeordneten, ersten Flanschs 38. Weiterhin weist die erste Lage 41 einen dritten Abschnitt 41c auf, der an der Kante zwischen der hinteren Seitenfläche 28 und zweiten Stirnfläche 34 in Richtung zur Profilendkante 20 hin abgewinkelt ist und einen Abschnitt des zweiten Flanschs 40 bildet.

Weiterhin umfasst der Steg aus Figur 2 eine zweite Lage 42 von Verstärkungsfasern, die ebenfalls drei Abschnitte aufweist. Ein erster Abschnitt 42a ist an der vorderen Seitenfläche 30 angeordnet. Eine zweiter Abschnitt 42b ist an der zweiten Stirnfläche 34 angeordnet und erstreckt sich von dort aus weiter in Richtung zur Profilendkante 20 hin, wobei er einen Abschnitt des zweiten Flanschs 40 bildet. Ein dritter Abschnitt 42c verläuft parallel zu einem Teil des zweiten Abschnitts 41b der ersten Lage 41 und bildet somit ebenfalls einen Abschnitt des ersten Flanschs 38. Weiterhin umfasst der Steg aus Figur 2 eine siebte Lage 47 von Verstärkungsfasern, die an der ersten Stirnfläche 32 angeordnet ist und sich von dort aus sowohl zur Profilnasenkante 22 hin als auch zur Profilendkante 20 hin erstreckt, sodass sie in entgegengesetzte Richtungen weisende Abschnitte des ersten Flanschs 38 bildet. An der gegenüberliegenden, in der Figur 2 unten dargestellten Seite weist der Steg außerdem eine achte Lage 48 von Verstärkungsfasern auf. Diese ist an der zweiten Stirnfläche 34 angeordnet und erstreckt sich von dort sowohl zur Profilnasenkante 22 hin als auch zur Profilendkante 20 hin, sodass sie in entgegengesetzte Richtungen weisende Abschnitte des zweiten Flanschs 40 bildet.

In Figur 2 liegt der erste Abschnitt 41a der ersten Lage 41 unmittelbar an der hinteren Seitenfläche 28 an, der erste Abschnitt 42a der zweiten Lage 42 liegt unmittelbar an der vorderen Seitenfläche 30 an, der zweite Abschnitt 41b der ersten Lage 41 liegt unmittelbar an der ersten Stirnfläche 32 an und der zweite Abschnitt 42b der zweiten Lage 42 liegt unmittelbar an der zweiten Stirnfläche 34 an.

Im Beispiel der Figur 3 gibt es ebenfalls sämtliche zur Figur 2 beschriebenen Lagen von Verstärkungsfasern. Diese sind in der Figur 3 mit denselben Bezugszeichen versehen wie in der Figur 2 und werden nicht nochmals erläutert. Zusätzlich gibt es zwei weitere erste Lagen 51 und zwei weitere zweite Lagen 52. Die weiteren ersten Lagen 51 weisen jeweils einen ersten Abschnitt 51a auf, der an der hinteren Seitenfläche 28 angeordnet ist, sich im Unterschied zum ersten Abschnitt 41a der ersten Lage 41 jedoch nur über einen Teil der Höhe des Kerns 12 erstreckt. Außerdem weisen die beiden ersten Lagen 51 jeweils einen zweiten Abschnitt 51b auf, der parallel zu dem zweiten Abschnitt 41b der ersten Lage 41 verläuft. Die beiden weiteren zweiten Lagen 52 sind spiegelsymmetrisch zu den beiden weiteren ersten Lagen 51 angeordnet und ihre jeweiligen ersten und zweiten Abschnitte sind mit dem Bezugszeichen 52a und 52b versehen.

Wie die Figur 3 zeigt, sind die ersten Abschnitte 51a der beiden weiteren ersten Lagen 51 zwischen der hinteren Seitenfläche 28 und dem ersten Abschnitt 41a der ersten Lage angeordnet. Der erste Abschnitt 41a der ersten Lage ebenso wie der zweite Abschnitt 41b der ersten Lage liegen also nicht mehr unmittelbar an der hinteren Seitenfläche 28 bzw. an der ersten Stirnfläche 32 an. Dies gilt entsprechend für die Anordnung der beiden weiteren zweiten Lagen 52.

Weiterhin zeigt Figur 3 eine fünfte Lage 45 von Verstärkungsfasern, die drei Abschnitte aufweist: Ein erster Abschnitt 45a ist an der hinteren Seitenfläche 28 angeordnet, ein zweiter Abschnitt 45b bildet einen zur Profilendkante 20 hinweisenden Abschnitt des ersten Flanschs 38 und ein dritter Abschnitt 45c bildet einen ebenfalls zur Profilendkante 20 hinweisen Abschnitt des zweiten Flanschs 40. Weiterhin weist der Steg aus Figur 3 eine sechste Lage 46 von Verstärkungsfasern auf, die ebenfalls drei Abschnitte 46a, 46b und 46c aufweist. Diese sind spiegelbildlich zu den erläuterten Abschnitten 45a, 45b und 45c der fünften Lage 45 angeordnet, d. h. an der vorderen Seitenfläche 30 und jeweils zur Profilnasenkante 22 hin weisend.

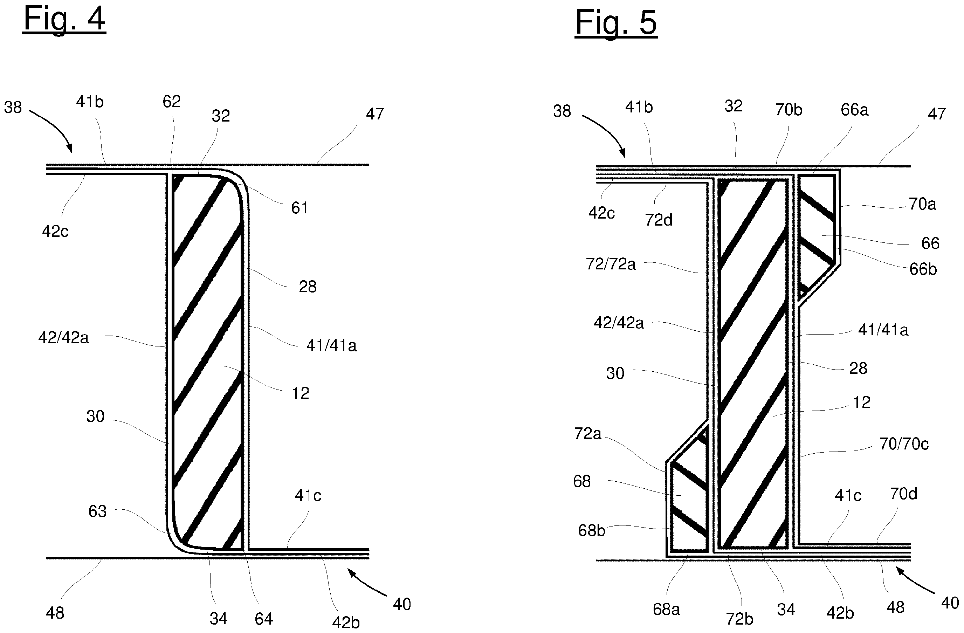

Figur 4 unterscheidet sich von dem Beispiel der Figur 2 durch die abweichende Formgebung des Kerns 12. Dieser weist zwischen der hinteren Seitenfläche 28 und der ersten Stirnfläche 32 eine erste Kante 61, zwischen der ersten Stirnfläche 32 und der vorderen Seitenfläche 30 eine zweite Kante 62, zwischen der vorderen Seitenfläche 30 und der zweiten Stirnfläche 34 eine dritte Kante 63 und zwischen der zweiten Stirnfläche 34 und der hinteren Seitenfläche 28 eine vierte Kante 64 auf. Die erste Kante 61 ist stärker abgerundet als die zweite Kante 62 und die dritte Kante 63 ist stärker abgerundet als die vierte Kante 64. Die zweite Kante 62 und die vierte Kante 64 sind mehr oder weniger scharfkantig ausgeführt bzw. nur mit einem kleinen Radius versehen. Die erste Kante 61 und die dritte Kante 63 sind beide mit demselben, relativ großen Radius abgerundet.

Hinsichtlich der Lagen von Verstärkungsfasern unterscheidet sich Figur 4 nicht von der Figur 2 und sämtliche Lagen sind mit denselben Bezugszeichen versehen wie in der Figur 2. Abweichend von der Figur 2 sind die jeweiligen Lagen an der ersten Kante 61 sowie an der dritten Kante 63 jedoch dem stark abgerundeten Verlauf folgend angeordnet. Sie liegen eng an der Oberfläche des Kerns 12 an.

Der Steg aus Figur 5 weist zusätzlich zu dem Kern 12, der wie in der Figur 2 ausgebildet ist, einen hinteren Zusatzkern 66 und einen vorderen Zusatzkern 68 auf. Der hintere Zusatzkern 66 ist an der hinteren Seitenfläche 28 des Kerns angeordnet und erstreckt sich nur über einen Teil der Höhe des Stegs. Er weist eine Stirnfläche 66a auf, die die erste Stirnfläche 32 verbreitert, und eine der Profilendkante 20 zugewandte hintere Seitenfläche 66b. Der vordere Zusatzkern 68 ist spiegelsymmetrisch zum hinteren Zusatzkern 66 ausgebildet, mit einer Stirnfläche 68a, die die zweite Stirnfläche 34 verbreitert, und einer der Profilnasenkante 22 zugewandten vorderen Seitenfläche 68b.

Hinsichtlich der Verstärkungsfasern weist der Steg aus Figur 5 sämtliche Lagen auf, die zur Figur 2 beschrieben wurden. Diese sind wiederum mit denselben Bezugszeichen versehen. Man erkennt, dass der erste Abschnitt 41a der ersten Lage 41 zwischen dem Kern 12 und dem hinteren Zusatzkern 66 verläuft, ebenso wie der erste Abschnitt 42a der zweiten Lage 42 zwischen dem Kern 12 und dem vorderen Zusatzkern 68 verläuft. Außerdem weist der Steg aus Figur 5 zwei Zusatzlagen von Verstärkungsfasern auf. Eine Zusatzlage 70 von Verstärkungsfasern hat einen ersten Abschnitt 70a, der an der hinteren Seitenfläche 66b angeordnet ist, und einen zweiten Abschnitt 70b, der an der Stirnfläche 66a angeordnet ist und sich von dort weiter in Richtung zur Profilnasenkante hin erstreckt, sodass er zu dem in diese Richtung weisenden Teil des ersten Flanschs 38 beiträgt. Die Zusatzlage 70 hat außerdem einen dritten Abschnitt 70c, der an der hinteren Seitenfläche 28 angeordnet ist, und einen vierten Abschnitt 70d, der parallel zum dritten Abschnitt 41c der ersten Lage verläuft. Eine weitere Zusatzlage 72 ist spiegelsymmetrisch zur Zusatzlage 70 angeordnet. Die entsprechenden Abschnitte sind mit 72a, 72b, 72c und 72d bezeichnet.

Figur 6 zeigt einen Steg mit einem Kern 12, einer ersten Lage 41 von Verstärkungsfasern mit drei Abschnitten 41a, 41b und 41c, einer zweiten Lage von Verstärkungsfasern 42 mit drei Abschnitten 42a, 42b und 42c, einer siebten Lage 47 von Verstärkungsfasern und einer achten Lage 48 von Verstärkungsfasern. Diese sind angeordnet wie zur Figur 2 beschrieben.

Außerdem gibt es eine weitere erste Lage 51 mit Abschnitten 51a und 51b sowie eine weitere zweite Lage 52 mit Abschnitten 52a und 52b. Diese sind angeordnet wie zur Figur 3 beschrieben. Weiterhin gibt es eine fünfte Lage 45 mit einem ersten Abschnitt 45a und einem zweiten Abschnitt 45b sowie eine sechste Lage 46 mit einem ersten Abschnitt 46a und einem zweiten Abschnitt 46c. Diese sind angeordnet, wie zur Figur 3 beschrieben. Davon abweichend weisen sie jedoch jeweils keinen dritten Abschnitt auf.

Eine Besonderheit der Figur 6 besteht darin, dass im Bereich der Kanten des Kerns 12 jeweils zwischen dem Kern 12 und einer der beschriebenen Lagen oder zwischen zwei der beschriebenen Lagen Abschnitte aus einem Vlies 58 aus einem thermoplastischen Kunststoffmaterial angeordnet sind.

### Liste der Bezugszeichen

- 10: Steg
- 12: Kern
- 14: erster Flansch
- 16: erste Halbschale
- 18: zweite Halbschale
- 20: Profilendkante
- 22: Profilnasenkante
- 24: Hauptgurt
- 26: zweiter Flansch
- 28: hintere Seitenfläche
- 30: vordere Seitenfläche
- 32: erste Stirnfläche
- 34: zweite Stirnfläche
- 38: erster Flansch
- 40: zweiter Flansch
- 41: erste Lage
- 41a/41b/41c: erster/zweiter/dritter Abschnitt der ersten Lage
- 42: zweite Lage
- 42a/42b/42c: erster/zweiter/dritter Abschnitt der ersten Lage
- 45: fünfte Lage
- 45a/45b/45c: erster/zweiter/dritter Abschnitt der fünften Lage
- 46: sechste Lage
- 46a/46b/46c: erster/zweiter/dritter Abschnitt der sechsten Lage
- 47: siebte Lage
- 48: achte Lage
- 51: weitere erste Lage
- 51a/51b: erster /zweiter Abschnitt der weiteren ersten Lage
- 52: weitere zweite Lage
- 52a/52b: erster/zweiter Abschnitt der weiteren zweiten Lage
- 58: Vlies
- 61: erste Kante
- 62: zweite Kante
- 63: dritte Kante
- 64: vierte Kante
- 66: hinterer Zusatzkern
- 66a: Stirnfläche
- 66b: Seitenfläche
- 68: vorderer Zusatzkern
- 68a: Stirnfläche
- 68b: Seitenfläche
- 70: Zusatzlage
- 70a/70b/70c/70d: erster/zweiter/dritter/vierter Abschnitt der Zusatzlage
- 72: Zusatzlage
- 72a/72b/72c/72d: erster/zweiter/dritter/vierter Abschnitt der Zusatzlage
- 100: Kern
- 102: Seitenfläche
- 104: Seitenfläche
- 106: Lage
- 108: Kante
- 110: Pfeil
- 112: Stirnfläche
- 114: Pfeil

## Patentansprüche

1. Steg zur Versteifung eines Windenergieanlagenrotorblatts, wobei der Steg folgendes aufweist:
• einen ersten Flansch (38) zum Verbinden mit einer ersten Halbschale (16) des Windenergieanlagenrotorblatts,
• einen zweiten Flansch (40) zum Verbinden mit einer zweiten Halbschale (18) des Windenergieanlagenrotorblatts,
• einen Kern (12), der sich über eine Höhe des Stegs erstreckt und eine erste Stirnfläche (32), die der ersten Halbschale (16) zugewandt ist, eine zweite Stirnfläche (34), die der zweiten Halbschale (18) zugewandt ist, eine vordere Seitenfläche (30), die einer Profilnasenkante (22) des Windenergieanlagenrotorblatts zugewandt ist, und eine hintere Seitenfläche (28), die einer Profilendkante (20) des Windenergieanlagenrotorblatts zugewandt ist, aufweist,
• eine erste Lage (41) von Verstärkungsfasern mit einem ersten Abschnitt (41a), der an der hinteren Seitenfläche (28) des Kerns (12) angeordnet ist, und einem zweiten Abschnitt (41b), der an der ersten Stirnfläche (32) des Kerns (12) angeordnet ist und sich von dort weiter zur Profilnasenkante (22) hin erstreckt, so dass er einen zur Profilnasenkante (22) weisenden Abschnitt des ersten Flanschs (38) bildet, und
• eine zweite Lage (42) von Verstärkungsfasern mit einem ersten Abschnitt (42a), der an der vorderen Seitenfläche (30) des Kerns (12) angeordnet ist, und einem zweiten Abschnitt (42b), der an der zweiten Stirnfläche (34) des Kerns (12) angeordnet ist und sich von dort weiter zur Profilendkante (20) hin erstreckt, so dass er einen zur Profilendkante (20) weisenden Abschnitt des zweiten Flanschs (40) bildet.

2. Steg nach Anspruch 1, **dadurch gekennzeichnet, dass** der Steg mindestens eine weitere erste Lage (51) von Verstärkungsfasern, die wie die erste Lage (41) angeordnet ist, und/oder mindestens eine weitere zweite Lage (52) von Verstärkungsfasern, die wie die zweite Lage (42) angeordnet ist, aufweist.

3. Steg nach Anspruch 1 oder 2, **dadurch gekennzeichnet, dass** der erste Abschnitt (41a) der ersten Lage (41) unmittelbar an der hinteren Seitenfläche (28) anliegt und/oder dass der erste Abschnitt (42a) der zweiten Lage (42) unmittelbar an der vorderen Seitenfläche (30) anliegt und/oder dass der zweite Abschnitt (41b) der ersten Lage (41) unmittelbar an der ersten Stirnfläche (32) anliegt und/oder dass der zweite Abschnitt (42b) der zweiten Lage (42) unmittelbar an der zweiten Stirnfläche (34) anliegt.

4. Steg nach einem der Ansprüche 1 bis 3, **dadurch gekennzeichnet, dass** der Steg eine dritte Lage von Verstärkungsfasern mit einem ersten Abschnitt, der an der hinteren Seitenfläche (28) des Kerns (12) angeordnet ist, und einem zweiten Abschnitt, der einen zur Profilendkante (20) weisenden Abschnitt des zweiten Flanschs (40) bildet, aufweist, und/oder dass der Steg eine vierte Lage von Verstärkungsfasern mit einem ersten Abschnitt, der an der vorderen Seitenfläche (30) des Kerns (12) angeordnet ist, und einem zweiten Abschnitt, der einen zur Profilnasenkante (22) weisenden Abschnitt des ersten Flanschs (38) bildet, aufweist.

5. Steg nach einem der Ansprüche 1 bis 4, **dadurch gekennzeichnet, dass** die erste Lage (41) einen dritten Abschnitt (42c), der einen zur Profilendkante (20) weisenden Abschnitt des zweiten Flanschs (40) bildet, und/oder dass die zweite Lage (42) einen dritten Abschnitt (42c), der einen zur Profilnasenkante (22) weisenden Abschnitt des ersten Flanschs (38) bildet, aufweist.

6. Steg nach einem der Ansprüche 1 bis 5, **dadurch gekennzeichnet, dass** der Steg eine fünfte Lage (45) von Verstärkungsfasern mit einem ersten Abschnitt (45a), der an der hinteren Seitenfläche (28) angeordnet ist, und einem zweiten Abschnitt (45b), der einen zur Profilendkante (20) weisenden Abschnitt des ersten Flanschs (38) bildet, und/oder dass der Steg eine sechste Lage (46) von Verstärkungsfasern mit einem ersten Abschnitt (46a), der an der vorderen Seitenfläche (30) angeordnet ist, und einem zweiten Abschnitt (46b), der einen zur Profilnasenkante (22) weisenden Abschnitt des zweiten Flanschs (40) bildet, aufweist.

7. Steg nach einem der Ansprüche 1 bis 6, **dadurch gekennzeichnet, dass** der Steg eine siebte Lage (47) von Verstärkungsfasern aufweist, die an der ersten Stirnfläche (32) angeordnet ist und sich von dort sowohl zur Profilnasenkante (22) hin als auch zur Profilendkante (20) hin erstreckt, so dass sie in entgegengesetzte Richtungen weisende Abschnitte des ersten Flanschs (38) bildet, und/oder dass der Steg eine achte Lage (48) von Verstärkungsfasern aufweist, die an der zweiten Stirnfläche (34) angeordnet ist und sich von dort sowohl zur Profilnasenkante (22) hin als auch zur Profilendkante (20) hin erstreckt, so dass sie in entgegengesetzte Richtungen weisende Abschnitte des zweiten Flanschs (40) bildet.

8. Steg nach einem der Ansprüche 1 bis 7, **dadurch gekennzeichnet, dass** der Kern (12) zwischen der ersten Stirnfläche (32) und der hinteren Seitenfläche (28) eine erste Kante (61) und zwischen der ersten Stirnfläche (32) und der vorderen Seitenfläche (30) eine zweite Kante (62) aufweist, wobei die erste Kante (61) stärker abgerundet ist als die zweite Kante (62), und/oder dass der Kern (12) zwischen der zweiten Stirnfläche (34) und der vorderen Seitenfläche (30) eine dritte Kante (63) und zwischen der zweiten Stirnfläche (34) und der hinteren Seitenfläche (28) eine vierte Kante (64) aufweist, wobei die dritte Kante (63) stärker abgerundet ist als die vierte Kante (64).

9. Steg nach einem der Ansprüche 1 bis 8, **dadurch gekennzeichnet, dass** der Steg einen hinteren Zusatzkern (66) aufweist, der an der hinteren Seitenfläche (28) des Kerns (12) angeordnet ist und sich nur über einen Teil der Höhe des Stegs erstreckt, so dass er die erste Stirnfläche (32) des Kerns (12) verbreitert, und/oder dass der Steg einen vorderen Zusatzkern (68) aufweist, der an der vorderen Seitenfläche (30) des Kerns angeordnet ist und sich nur über einen Teil der Höhe des Stegs erstreckt, so dass er die zweite Stirnfläche (34) des Kerns (12) verbreitert.

10. Steg nach Anspruch 9, **dadurch gekennzeichnet, dass** die erste Lage (41) zwischen dem Kern (12) und dem hinteren Zusatzkern (66) angeordnet ist und/oder dass die zweite Lage (42) zwischen dem Kern (12) und dem vorderen Zusatzkern (68) angeordnet ist.

11. Steg nach Anspruch 9 oder 10, **dadurch gekennzeichnet, dass** der Steg eine Zusatzlage (70) von Verstärkungsfasern mit einem ersten Abschnitt (70a), der an einer der Profilendkante (20) zugewandten Seitenfläche (66b) des hinteren Zusatzkerns (66) angeordnet ist, und einem zweiten Abschnitt (70b), der an einer Stirnfläche (66a) des hinteren Zusatzkerns (66), die die erste Stirnfläche (32) des Kerns (12) fortsetzt, und an der ersten Stirnfläche (32) des Kerns (12) angeordnet ist und sich von dort weiter in Richtung zu der Profilnasenkante (22) hin erstreckt, so dass er einen zur Profilnasenkante (22) weisenden Abschnitt des ersten Flanschs (38) bildet, aufweist und/oder dass der Steg eine Zusatzlage (72) von Verstärkungsfasern mit einem ersten Abschnitt (72a), der an einer der Profilnasenkante (22) zugewandten Seitenfläche (68b) des vorderen Zusatzkerns (68) angeordnet ist, und einem zweiten Abschnitt (72b), der an einer Stirnfläche (68a) des vorderen Zusatzkerns (68), die die zweite Stirnfläche (34) des Kerns (12) fortsetzt, und an der zweiten Stirnfläche (34) des Kerns (12) angeordnet ist und sich von dort weiter in Richtung zu der Profilendkante (20) hin erstreckt, so dass er einen zur Profilendkante (20) weisenden Abschnitt des zweiten Flanschs (40) bildet, aufweist.

12. Steg nach einem der Ansprüche 1 bis 11, **dadurch gekennzeichnet, dass** eine Oberfläche des Kerns (12) im Bereich einer Kante (61, 62, 63, 64) zwischen einer Stirnfläche (32, 34) und einer angrenzenden Seitenfläche (28, 30) aufgeraut und/oder mit einer gröberen Zellstruktur versehen ist.

13. Steg nach einem der Ansprüche 1 bis 12, **dadurch gekennzeichnet, dass** zwischen dem Kern (12) und einer angrenzenden Lage von Verstärkungsfasern und/oder zwischen zwei Lagen von Verstärkungsfasern, jeweils insbesondere im Bereich einer Kante (61, 62, 63, 64) zwischen einer Stirnfläche (32, 34) des Kerns (12) und einer angrenzenden Seitenfläche (28, 30) des Kerns (12), ein Vlies (58) aus einem thermoplastischen Kunststoffmaterial (PET, PA, PP) angeordnet ist.

14. Windenergieanlagenrotorblatt mit einer ersten Halbschale (16), einer zweiten Halbschale (18), einer Längsrichtung, einem aerodynamischen Profil, das eine Profilnasenkante (22) und eine Profilendkante (20) aufweist, und einem Steg nach einem der Ansprüche 1 bis 13, wobei der Steg in der Längsrichtung verläuft und der erste Flansch (38) des Stegs mit der ersten Halbschale (16) und der zweite Flansch (40) des Stegs mit der zweiten Halbschale (18) verbunden ist.

## Claims

1. A shear web for stiffening a wind turbine rotor blade, the shear web comprising:
a first flange (38) configured to connect to a first half-shell (16) of the wind turbine rotor blade;
a second flange (40) configured to connect to a second half-shell (18) of the wind turbine rotor blade;
a core (12) extending over a height of the shear web, said core having a first end face (32) configured to face the first half-shell (16), a second end face (34) configured to face the second half-shell (18), a front side face (30) configured to face a profile leading edge (22) of the wind turbine rotor blade, and a rear side face (28) configured to face a profile trailing edge (20) of the wind turbine rotor blade;
a first layer (41) of reinforcing fibers having a first portion (41a), which is arranged on said rear side face (28) of said core (12), and a second portion (41b) arranged on said first end face (32) of said core (12) and extending from said first end face (32) further toward said profile leading edge (22), such that said second portion (41b) forms a portion of said first flange (38) that faces said profile leading edge (22); and,
a second layer (42) of reinforcing fibers having a first portion (42a), which is arranged on said front side face (30) of said core (12), and a second portion (42b) arranged on said second end face (34) of said core (12) and extending from said second end face (34) of said core (12) further toward said profile trailing edge (20), such that said second portion (42b) forms a portion of said second flange (40) that faces said profile trailing edge (20).

2. The shear web according to claim 1, wherein the shear web comprises at least one of a further first layer (51) of reinforcing fibers arranged like said first layer (41) and/or at least a further second layer (52) of reinforcing fibers arranged like said second layer (42).

3. The shear web according to claim 1 or 2, wherein said first portion (41a) of said first layer (41) lies directly against said rear side face (28), and/or wherein said first portion (42a) of said second layer (42) lies directly against the front side face (30), and/or wherein said second portion (41b) of said first layer (41) lies directly against said first end face (32), and/or wherein said second portion (42b) of said second layer (42) lies directly against said second end face (34).

4. The shear web according to any of the claims 1 to 3, wherein the shear web comprises a third layer of reinforcing fibers having a first portion arranged on said rear side face (28) of said core (12) and a second portion which forms a portion of said second flange (40) that faces the profile trailing edge (20) and / or wherein the shear web comprises a fourth layer of reinforcing fibers having a first portion arranged on said front side face (30) of said core (12) and a second portion which forms a portion of said first flange (38) that faces the profile leading edge (22).

5. The shear web according to any of the claims 1 to 4, wherein said first layer (41) has a third portion (41c), which forms a portion of said second flange (40) which faces the profile trailing edge (20) and / or wherein said second layer (42) has a third portion (42c), which forms a portion of said first flange (38) that faces the profile leading edge (22).

6. The shear web according to any of the claims 1 to 5, wherein the shear web comprises a fifth layer (45) of reinforcing fibers having a first portion (45a), which is arranged on said rear side face (28), and a second portion (45b), which forms a portion of said first flange (38) that faces the profile trailing edge (20) and / or wherein the shear web comprises a sixth layer (46) of reinforcing fibers having a first portion (46a), which is arranged on said front side face (30), and a second portion (46b), which forms a portion of said second flange (40) that faces the profile leading edge (22).

7. The shear web according to any of the claims 1 to 6, wherein the shear web comprises a seventh layer (47) of reinforcing fibers being arranged on said first end face (32) and extending from said first end face both toward the profile leading edge (22) and toward the profile trailing edge (20), such that said seventh layer (47) forms portions of said first flange (38) that face in opposite directions and / or an eighth layer (48) of reinforcing fibers being arranged on said second end face (34) and extending from said second end face both toward the profile leading edge (22) and toward the profile trailing edge (20), such that said eighth layer (48) forms portions of said second flange (40) that face in opposite directions.

8. The shear web according to any of the claims 1 to 7, wherein said core (12) has a first edge (61) between said first end face (32) and said rear side face (28) and a second edge (62) between said first end face (32) and said front side face (30), said first edge (61) being rounded to a more pronounced extent than said second edge (62) and / or wherein said core (12) has a third edge (63) between said second end face (34) and said front side face (30) and a fourth edge (64) between said second end face (34) and said rear side face (28), said third edge (63) being rounded to a more pronounced extent than said fourth edge (64).

9. The shear web according to any of the claims 1 to 8, wherein the shear web comprises a rear additional core (66), which is arranged on said rear side face (28) and extends only over part of the height of the shear web, such that said rear additional core (66) widens said first end face (32) of the core (12), and / or the shear web comprises a front additional core (68), which is arranged on said front side face (30) of said core and extends only over part of the height of the shear web, such that said front additional core (68) widens said second end face (34) of the core (12).

10. The shear web according to claim 9, wherein said first layer (41) is arranged between said core (12) and said rear additional core (66) and/or wherein said second layer (42) is arranged between said core (12) and said front additional core (68).

11. The shear web according to of claim 9 or 10, wherein the shear web comprises
an additional layer (70) of reinforcing fibers having a first portion (70a), which is arranged on a side face (66b) of said rear additional core (66) that faces the profile trailing edge (20), and a second portion (70b), which is arranged on an end face (66a) of said rear additional core (66), which extends said first end face (32) of said core, and said second portion (70b) is further arranged on said first end face (32) of said core (12) and extends from said first end face (32) of said core (12) further in the direction toward the profile leading edge (22), such that said second portion (70b) forms a portion of said first flange (38) that faces the profile leading edge (22); and / or wherein the shear web comprises
a further layer (72) of reinforcing fibers having a first portion (72a), which is arranged on a side face (68b) of the front additional core (68) that faces the profile leading edge (22), and a second portion (72b), which is arranged on an end face (68a) of said front additional core (68), which extends said second end face (34) of said core (12), and said second portion (72b) is further arranged on said second end face (34) of said core (12) and extends from said second end face (34) further in the direction toward the profile trailing edge (20), such that said second portion (72b) forms a portion of said second flange (40) that faces the profile trailing edge (20).

12. The shear web according to any of the claims 1 to 11, wherein in a region of an edge (61, 62, 63, 64) between an end face (32, 34) and an adjoining side face (28, 30), said core (12) has a surface which is roughened and / or provided with a coarser cell structure.

13. The shear web according to any of the claims 1 to 12, wherein a nonwoven (58) of a thermoplastic material is arranged between said core (12) and an adjoining layer of said reinforcing fibers and / or between two layers of said reinforcing fibers, in each case in a region of an edge (61, 62, 63, 64) between an end face (32, 34) of the core (12) and an adjoining side face (28, 30) of the core (12).

14. A wind turbine rotor blade comprising a first half-shell (16), a second half-shell (18), a longitudinal direction, an aerodynamic profile having a profile leading edge (22) and a profile trailing edge (20), and a shear web according to any of the claims 1 to 13, wherein the shear web is running in the longitudinal direction and said first flange (38) of said shear web being connected to said first half-shell (16) and said second flange (40) of said shear web being connected to said second half-shell (18).

## Revendications

1. Pont de rigidification d'une pale de rotor d'éolienne, le pont comprenant :
une première bride (38) pour l'accouplement à une première demi-coque (16) de la pale de rotor d'éolienne,
une deuxième bride (40) pour l'accouplement à une deuxième demi-coque (18) de la pale de rotor d'éolienne,
un noyau (12), lequel s'étend sur une hauteur du pont et présente une première surface frontale (32) tournée vers la première demi-coque (16), une deuxième surface frontale (34) tournée vers la deuxième demi-coque (18), une surface latérale avant (30) tournée vers une arête de nez profilé (22) de la pale de rotor d'éolienne, et une surface latérale arrière (28) tournée vers une arête d'extrémité de profilé (20) de la pale de rotor d'éolienne,
une première couche (41) de fibres de renforcement avec une première section (41a) disposée sur la surface latérale arrière (28) du noyau (12), et une deuxième section (41b) disposée sur la première surface frontale (32) du noyau (12) et s'étendant plus loin vers l'arête de nez profilé (22) à partir de celle-ci, de manière à former une section de la première bride (38) dirigée vers l'arête de nez profilé (22), et
une deuxième couche (42) de fibres de renforcement avec une première section (42a) disposée sur la surface latérale avant (30) du noyau (12), et une deuxième section (42b) disposée sur la deuxième surface frontale (34) du noyau (12) et s'étendant plus loin vers l'arête d'extrémité de profilé (20) à partir de celle-ci, de manière à former une section de la deuxième bride (40) dirigée vers l'arête d'extrémité de profilé (20).

2. Pont selon la revendication 1, **caractérisé en ce que** le pont présente au moins une autre première couche (51) de fibres de renforcement, laquelle est disposée de la même façon que la première couche (41), et/ou au moins une autre deuxième couche (52) de fibres de renforcement, laquelle est disposée de la même façon que la deuxième couche (42).

3. Pont selon la revendication 1 ou 2, **caractérisé en ce que** la première section (41a) de la première couche (41) s'applique directement sur la surface latérale arrière (28) et/ou **en ce que** la première section (42a) de la deuxième couche s'applique directement sur la surface latérale avant (30) et/ou **en ce que** la deuxième section (41b) de la première couche (41) s'applique directement sur la première surface frontale (32) et/ou **en ce que** la deuxième section (42b) de la deuxième couche (42) s'applique directement sur la deuxième surface frontale (34).

4. Pont selon l'une des revendications 1 à 3, **caractérisé en ce que** le pont présente une troisième couche de fibres de renforcement avec une première section disposée sur la surface latérale arrière (28) du noyau (12), et une deuxième section formant une section de la deuxième bride (40) dirigée vers l'arête d'extrémité de profilé (20), et/ou **en ce que** le pont présente une quatrième couche de fibres de renforcement avec une première section disposée sur la surface latérale avant (30) du noyau (12), et une deuxième section formant une section de la première bride (38) dirigée vers l'arête de nez profilé (22).

5. Pont selon l'une des revendications 1 à 4, **caractérisé en ce que** la première couche (41) présente une troisième section (42c) formant une section de la deuxième bride (40) dirigée vers l'arête d'extrémité de profilé (20), et/ou **en ce que** la deuxième couche (42) présente une troisième section (42c) formant une section de la première bride (38) dirigée vers l'arête de nez profilé (22).

6. Pont selon l'une des revendications 1 à 5, **caractérisé en ce que** le pont présente une cinquième couche (45) de fibres de renforcement avec une première section (45A) disposée sur la surface latérale arrière (28), et une deuxième section (45b) formant une section de la première bride (38) dirigée vers l'arête d'extrémité de profilé (20), et/ou **en ce que** le pont présente une sixième couche (46) de fibres de renforcement avec une première section (46a) disposée sur la surface latérale avant (30), et une deuxième section (46b) formant une section de la deuxième bride (40) dirigée vers l'arête de nez profilé (22).

7. Pont selon l'une des revendications 1 à 6, **caractérisé en ce que** le pont présente une septième couche (47) de fibres de renforcement disposée sur la première surface frontale (32) et s'étendant aussi bien vers l'arête de nez profilé (22) que vers l'arête d'extrémité de profilé (20) à partir de celle-ci, de manière à former des sections de la première bride (38) dirigées dans des directions opposées, et/ou **en ce que** le pont présente une huitième couche (48) de fibres de renforcement disposée sur la deuxième surface frontale (34) et s'étendant aussi bien vers l'arête de nez profilé (22) que vers l'arête d'extrémité de profilé (20) à partir de celle-ci, de manière à former des sections de la deuxième bride (40) dirigées dans des directions opposées.

8. Pont selon l'une des revendications 1 à 7, **caractérisé en ce que** le noyau (12) présente une première arête (61) entre la première surface frontale (32) et la surface latérale arrière (28) et une deuxième arête (62) entre la première surface frontale (32) et la surface latérale avant (30), dans lequel la première arête (61) est plus arrondie que la deuxième arête (62), et/ou **en ce que** le noyau (12) présente une troisième arête (63) entre la deuxième surface frontale (34) et la surface latérale avant (30) et une quatrième arête (64) entre la deuxième surface frontale (34) et la surface latérale arrière (28), dans lequel la troisième arête (63) est plus arrondie que la quatrième arête (64).

9. Pont selon l'une des revendications 1 à 8, **caractérisé en ce que** le pont présente un noyau supplémentaire arrière (66) disposé sur la surface latérale arrière (28) du noyau (12) et s'étendant seulement sur une partie de la hauteur du pont, de manière à élargir la première surface frontale (32) du noyau (12), et/ou **en ce que** le pont présente un noyau supplémentaire avant (68) disposé sur la surface latérale avant (30) du noyau et s'étendant seulement sur une partie de la hauteur du pont, de manière à élargir la deuxième surface frontale (34) du noyau (12).

10. Pont selon la revendication 9, **caractérisé en ce que** la première couche (41) est disposée entre le noyau (12) et le noyau supplémentaire arrière (66) et/ou **en ce que** la deuxième couche (42) est disposée entre le noyau (12) et le noyau supplémentaire avant (68).

11. Pont selon la revendication 9 ou 10, **caractérisé en ce que** le pont présente une couche supplémentaire (70) de fibres de renforcement avec une première section (70a) disposée sur une surface latérale (66b) du noyau supplémentaire arrière (66) tournée vers l'arête d'extrémité de profilé (20), et une deuxième section (70b) disposée sur une surface frontale (66a) du noyau supplémentaire arrière (66) prolongeant la première surface frontale (32) du noyau (12) et sur la première surface frontale (32) du noyau (12) et s'étendant plus loin vers l'arête de nez profilé (22) à partir de celles-ci, de manière à former une section de la première bride (38) dirigée vers l'arête de nez profilé (22), et/ou **en ce que** le pont présente une couche supplémentaire (72) de fibres de renforcement avec une première section (72a) disposée sur une surface latérale (68b) du noyau supplémentaire avant (68) tournée vers l'arête de nez profilé (22), et une deuxième section (72b) disposée sur une surface frontale (68a) du noyau supplémentaire avant (68) prolongeant la deuxième surface frontale (34) du noyau (12) et sur la deuxième surface frontale (34) du noyau (12) et s'étendant plus loin vers l'arête d'extrémité de profilé (20) à partir de celles-ci, de manière à former une section de la deuxième bride (40) dirigée vers l'arête d'extrémité de profilé (20).

12. Pont selon l'une des revendications 1 à 11, **caractérisé en ce qu'**une surface supérieure du noyau (12) dans la région d'une arête (61, 62, 63, 64) est rendue rugueuse entre une surface frontale (32, 34) et une surface latérale (28, 30) adjacente et/ou pourvue d'une structure cellulaire plus grossière.

13. Pont selon l'une des revendications 1 à 12, **caractérisé en ce qu'**une toile (58) de matière synthétique thermoplastique (PET, PA, PP) est disposée entre le noyau (12) et une couche adjacente de fibres de renforcement et/ou entre deux couches de fibres de renforcement, en particulier respectivement dans la région d'une arête (61, 62, 63, 64) entre une surface frontale (32, 34) du noyau (12) et une surface latérale (28, 30) adjacente du noyau (12).

14. Pale de rotor d'éolienne comprenant une première demi-coque (16), une deuxième demi-coque (18), une direction longitudinale, une profilé aérodynamique présentant une arête de nez profilé (22) et une arête d'extrémité de profilé (20), et un pont selon l'une des revendications 1 à 13, dans laquelle le pont s'étend dans la direction longitudinale et la première bride (38) du pont est reliée à la première demi-coque (16) et la deuxième bride (40) du pont est reliée à la deuxième demi-coque (18).
